# EUROPEAN PATENT APPLICATION

(11) **EP 4 455 071 A1**
(43) Date of publication of application: **30.10.2024**
(21) Application number: 24172562.1
(22) Date of filing: 25.04.2024
(51) Int. Cl.: B66C 1/10, B64D 1/22, B66C 13/08, B66D 1/26

(54) **LIFTING TOOL, LIFTING AND LOADING DEVICE USING THE SAME, SYSTEM AND METHOD FOR ADJUSTING ATTITUDE OF THE LIFTING TOOL**

(30) Priority: 28.04.2023 CN 202310486038
(71) Applicant: Angavia Tech (Beijing) Co., Ltd., Beijing 100080 (CN)
(72) Inventor: ZHANG, Yao, Beijing, 100080 (CN); MA, Yiran, Beijing, 100080 (CN)
(74) Representative: Patentwerk B.V.

(57) **Abstract**

A lifting tool (10) includes a load-bearing device (100) and a plurality of winch units (200) installed on the load-bearing device. The winch unit (200) includes a winch body (210), a rope (220), a motor (230), and a transmission mechanism (240). The motor (230) transmits power to the winch body (210) through the transmission mechanism (240) to drive the winch body (210) to rotate. One end of the rope (220) is wound around the winch body (210), and the other end of the rope (220) is connected to a lifting and loading device.

## Description

### FIELD OF THE INVENTION

The present disclosure relates to the field of lifting equipment, and in particular to a lifting tool, a lifting and loading device using the lifting tool, and a system and method for adjusting the attitude of the lifting tool.

### BACKGROUND OF THE INVENTION

The description of background provided herein is used to provide an overall introduction to the background of the present application. Work of the currently named inventors, to the extent it is described in this section, and all aspects in the description that do not constitute the prior art at the time of filing the present application, are neither explicitly nor implicitly acknowledged as the prior art against the present application.

Lifting equipments has a wide range of applications in construction engineering, production and manufacturing, and cargo transportation, etc. The lifting equipment in the prior art usually uses a rope and a hook to lift an object, that is, the object is hanged onto the rope or the object is tied with the rope, then the rope is hanged onto the hook and lifted by a hoisting device. However, during use of the lifting equipment in the prior art, since the vertical forces applied to the object are concentrated on one hook, it is easy for the object to rotate in a horizontal direction and tilt in a vertical direction during the lifting process, so that balance and stability cannot be effectively ensured, thus resulting in safety hazards.

### SUMMARY OF THE INVENTION

This section introduces the selection of inventive concepts in a simplified form, and these concepts will be further reflected in the following detailed description. This section is not intended to identify the key or essential features of the claimed subjects, nor is it intended to be used as assistance in determining the scope of the claimed subjects.

In view of the existing problems in the prior art, in one aspect of the present application, a lifting tool is provided, which includes a load-bearing device and a plurality of winch units installed on the load-bearing device; the winch unit includes a winch body, a rope, a motor, and a transmission mechanism; the motor transmits power to the winch body through the transmission mechanism to drive the winch body to rotate; one end of the rope is wound around the winch body, and the other end of the rope is connected to a lifting and loading device.

Preferably, the transmission mechanism is a planetary gear mechanism, in which a sun gear of the planetary gear mechanism is installed on an output end of the motor, a gear ring of the planetary gear mechanism is integrated with an inner side of the winch body, and a planetary gear of the planetary gear mechanism meshes with the gear ring.

Preferably, the transmission mechanism is a bevel gear mechanism, which includes a first bevel gear installed on an output end of the motor; the winch body is installed with a flange surrounding the winch body, and the flange is a second bevel gear provided with teeth; wherein the motor can drive the winch body to rotate through the first bevel gear and the second bevel gear.

Preferably, the bevel gear mechanism further includes a third bevel gear and a fourth bevel gear; wherein the third bevel gear and the fourth bevel gear are installed on the same shaft; the first bevel gear meshes with the third bevel gear, and the second bevel gear meshes with the fourth bevel gear.

Preferably, the winch unit further includes a power supply to provide electric power to the motor.

Preferably, the rope is a conductive rope for charging the power supply of the winch unit.

Preferably, the load-bearing device has at least one installation surface, and the winch bodies are distributed on the at least one installation surface of the load-bearing device at intervals along a circumference centered on a geometric center of the installation surface.

Preferably, the load-bearing device has two installation surfaces, and the winch bodies are installed to the two installation surfaces in a space between the two installation surfaces.

Preferably, the installation surface of the load-bearing device has a rectangular or circular shape.

Preferably, the number of the winch units is three.

Preferably, the number of the winch units is four, and the winch bodies are arranged in such a way that geometric centers thereof can form vertices of a rectangle.

Preferably, central axes of the winch units are perpendicular to the installation surface of the load-bearing device.

Preferably, the winch unit further includes a rope guide mechanism, on which a pulley is installed for changing the direction of the rope.

Preferably, central axes of the winch units are parallel to the installation surface of the load-bearing device.

Preferably, at least two fluid power devices are further installed on the installation surface, and the fluid power devices are evenly distributed along the circumference and are steerable.

Preferably, the number of the fluid power devices is four; the fluid power devices are distributed at intervals along the circumference and can provide forces along a tangential direction of the circumference; the number of the fluid power devices that provide forces in a clockwise direction along the tangential direction and the number of the fluid power devices that provide forces in a counterclockwise direction along the tangential direction are both two, and these fluid power devices are alternately distributed.

Preferably, the number of the fluid power devices is at least three, and a tail portion of the fluid power device is installed with a steerable rudder or air guide pipe.

Preferably, at least three fluid power devices are further installed on the installation surface, and the fluid power devices are steerable or non-steerable.

Preferably, the fluid power device is a propeller, a duct, a gas injection device, or a liquid injection device.

Preferably, the load-bearing device is provided with installation holes for installing hooks.

Preferably, the load-bearing device is a rectangular box.

Preferably, the number of the winch units is four, with two winch bodies being installed on each of two opposite side surfaces of the rectangular box respectively; the winch bodies are arranged in such a way that geometric centers thereof can form vertices of a rectangle parallel to a bottom surface of the rectangular box.

Preferably, the rectangular box is provided with an opening on a top surface or side surface, or with a door that can be opened and closed on a bottom surface.

Preferably, at least one fluid power device is installed on each edge in a height direction of the load-bearing device.

Preferably, the load-bearing device is further provided with a cut-off actuator to cut off the ropes when the lifting tool is in an abnormal state.

Preferably, the abnormal states include the winch unit not being able to operate, the rope being entangled on foreign objects, and the load-bearing device not being retracted after exceeding a preset time when lowered.

In another aspect of the present application, a lifting and loading device using the lifting tool of the present application is provided, in which the other ends of the ropes of the lifting tool are connected to the lifting and loading device.

Preferably, the lifting and loading device is an aircraft, a bridge crane, a gantry crane, a stacking crane, a boom crane, a floating crane, or a mast crane.

In another aspect of the present application, a system for adjusting the attitude of the lifting tool is provided, in which the system includes an attitude sensor and a control unit; the attitude sensor is installed on the load-bearing device to detect attitude information of the lifting tool, and the control unit is capable of receiving the attitude information detected by the attitude sensor and adjusting a rotational speed and output torque of the motor based on the attitude information.

Preferably, the control unit includes a controller and a FOC electronic speed controller; wherein the controller is capable of receiving the attitude information detected by the attitude sensor and sending or not sending an instruction to adjust the rotational speed and output torque of the motor to the FOC electronic speed controller based on the attitude information.

Preferably, the attitude sensor includes a gyroscope and a magnetic compass.

Preferably, the controller is installed on the lifting tool or outside the lifting tool.

In yet another aspect of the present application, a method for adjusting the attitude of the lifting tool is provided, in which the method includes: detecting attitude information of the load-bearing device; adjusting a rotational speed and output torque of the motor based on the attitude information of the load-bearing device; and transmitting the adjusted rotational speed and output torque to the winch bodies.

Preferably, the attitude information of the load-bearing device is detected by an attitude sensor installed on the load-bearing device.

Preferably, a controller is used to adjust the rotational speed and output torque of the motor and send a corresponding instruction.

Preferably, a FOC electronic speed controller is used to receive the instruction sent from the controller and adjust the rotational speed and output torque of the driving motor according to the instruction.

The lifting tool of the present application is not prone to tilting during use, and its attitude can be conveniently adjusted, having good stability. By using the system and method for adjusting the attitude of the lifting tool of the present application, real-time automatic adjustment to the attitude of the lifting tool can be achieved, enabling the lifting tool to always maintain in parallel to the ground with high adjustment accuracy and simple operation.

### BRIEF DESCRIPTION OF THE DRAWINGS

In the following detailed description of embodiments, other or additional features, advantages and details will be presented by way of example only. In the drawings:
FIG. 1 shows a schematic structural view of the lifting tool according to the principle of the present application;
FIG. 2 shows a schematic view of installing four winch bodies on an installation surface of the load-bearing device;
FIG. 3 shows a schematic side view of installing the winch bodies on two installation surfaces of the load-bearing device;
FIG. 4 shows a schematic structural view when the transmission mechanism is a planetary gear mechanism;
FIG. 5 shows a schematic structural view when the transmission mechanism is a bevel gear mechanism;
FIG. 6 shows a schematic layout view when a fluid power device is provided on the load-bearing device;
FIG. 7 shows a schematic layout view when two fluid power devices are installed on the load-bearing device;
FIG. 8 shows a schematic layout view when four fluid power devices are installed on the load-bearing device;
FIG. 9 shows a schematic view of the rudder;
FIG. 10 shows a schematic structural view when the load-bearing device is a rectangular box;
FIG. 11 shows a schematic structural view when the load-bearing device is a rectangular box with an opening being provided on the side surface;
FIG. 12 shows a schematic structural view when the load-bearing device is a rectangular box with an opening and a door being provided on the bottom surface;
FIG. 13 shows a schematic structural view when charging the power supply on the load-bearing device using a rope;
FIG. 14 shows another schematic structural view when charging the power supply on the load-bearing device using a rope; and
FIG. 15 shows a schematic view of the system for adjusting the attitude of the lifting tool according to the principle of the present application.

### DETAILED DESCRIPTION OF THE EMBODIMENT(S) OF THE INVENTION

The following description is essentially illustrative and not intended to limit the present application, its application or use. Further, it is not intended to limit the present application by any explicit or implicit theory presented in the preceding sections of "FIELD OF THE INVENTION", "BACKGROUND OF THE INVENTION" and "SUMMARY OF THE INVENTION" or the following detailed description. It should be understood that throughout the drawings, corresponding reference signs denote similar or corresponding components or features.

The present application will now be further explained below. In the following paragraphs, different aspects of the present application are defined in greater detail. Unless explicitly indicated to the contrary, each of the such-defined aspects can be combined with any other (multiple) aspects. In particular, any feature indicated as being preferred or advantageous can be combined with any other (multiple) features indicated as being preferred or advantageous.

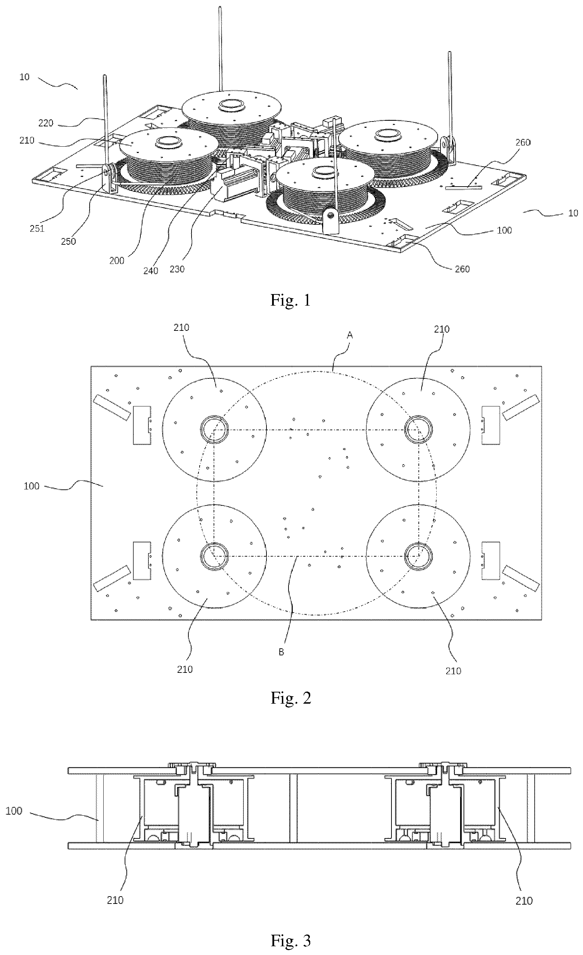

Referring to FIG. 1, a lifting tool 10 according to the principle of the present application is schematically shown. The lifting tool 10 includes a load-bearing device 100 and winch units 200 installed on the load-bearing device 100. The winch unit 200 includes a winch body 210, a rope 220, a motor 230, and a transmission mechanism 240. One end of the rope 220 is wound around the winch body 210, and the other end of the rope 220 can be connected to a lifting and loading device (not shown), so that the load-bearing device 100 can be suspended. The motor 230 of the winch unit 200 can provide power, and the transmission mechanism 240 can transmit the power generated by the motor 230 to the winch body 210, thereby driving the winch body 210 to rotate, realizing the retraction and deployment of the rope 220, and thus achieving the lifting and lowering of the load-bearing device 100. The load-bearing device 100 can be used to carry objects, or to lift objects by a hook installed on the load-bearing device 100. Advantageously, a cut-out structure (not shown) can also be provided on the load-bearing device 100 to reduce the weight of the load-bearing device 100. Advantageously, a power supply can be installed on the load-bearing device 100 to provide power for the motor 230 or other devices in need. In FIG. 1, it is shown that the number of the winches/ropes is four. However, the present application is not limited to this, and rather, the number may be, for example, two, three, or more, as easily understood by those skilled in the art. The rope of the present application may be, for example, a metal rope, such as a steel wire rope or a copper wire rope, or any form of rope such as a nylon rope. Preferably, multiple winch units 200 (such as three or four) are installed on the load-bearing device 100 according to the principle of the present application, so that the load-bearing device 100 is subjected to vertical pulling forces at multiple force bearing points, and will therefore be less likely to rotate or tilt during the lifting process of the object.

Referring to FIG. 2, advantageously, the load-bearing device 100 has at least one installation surface for installing multiple winch bodies 210, and the multiple winch bodies 210 are distributed at intervals along a circumference A centered on the geometric center of the installation surface, so that a distance from the geometric center of each winch body 210 to the geometric center of the installation surface is equal, which is advantageous for the stability and balance of the load-bearing device 100. The installation surface can be rectangular, circular, or of any other shape. In addition, the installation surface can also be provided with cut-outs, etc., as long as load bearing or installation of the winch units or other components is not affected. As can be easily understood by those skilled in the art, this is advantageous for reducing the weight of the lifting tool. Advantageously, the number of the winch bodies 210 can be three, and in such case, the three winch bodies 210 can evenly divide the circle on which they are located. Advantageously, the number of the winch bodies 210 can also be four. Preferably, the four winch bodies 210 are arranged in such a way that their geometric centers can form vertices of a rectangle B, thus making it easier for the load-bearing device 100 to resist externally applied rotational torque and enhancing the stability.

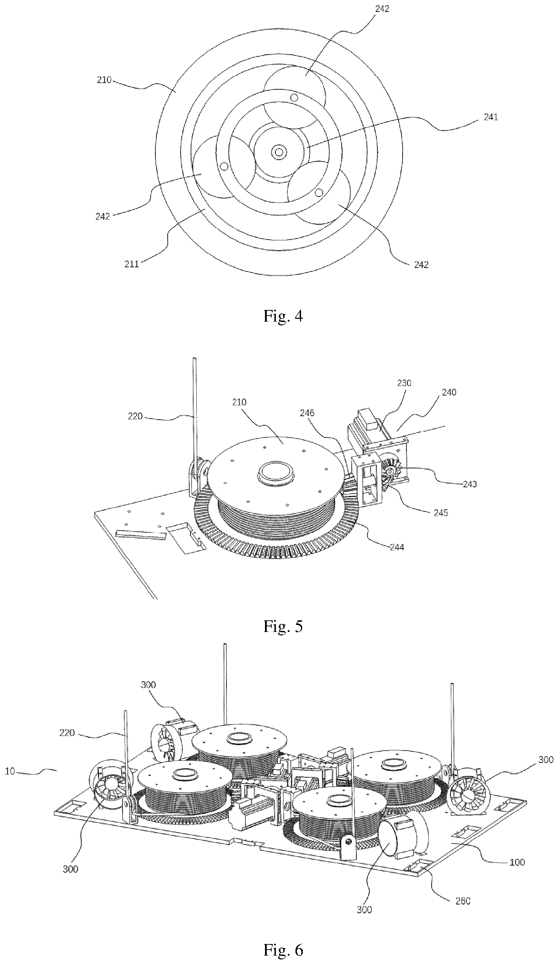

Referring to FIG. 3, the load-bearing device 100 may also have two installation surfaces. Advantageously, the winch bodies 210 can be installed on these two installation surfaces and located in a space between these two installation surfaces. In this way, the installation stability can be increased, and a larger installation space can also be provided, which is advantageous for the layout of components on the load-bearing device 100. In addition, by installing the winch bodies 210 and other components between these two installation surfaces, these two installation surfaces can also be supported and reinforced, so there is no need to additionally provide a support structure between these two installation surfaces. Additionally, the components installed between these two installation surfaces can enhance the structural strength of the load-bearing device 100, which can also reduce the strength requirement for each installation surface to some extent. Therefore, cut-out structures can also be provided on the installation surfaces to reduce the weight of the load-bearing device 100. Referring to FIG. 4, the transmission mechanism 240 according to the principle of the present application can be a planetary gear mechanism. The planetary gear mechanism includes a sun gear 241 and a planetary gear 242 that meshes with the sun gear 241. The sun gear 241 is connected to an output end of the motor 230, so that the sun gear 241 can receive power provided by the motor 230. An inner ring of the winch body 210 is configured as a ring gear 211 which meshes with the planetary gear 242. When the motor 230 is running, it can transmit the power to the planetary gear 242 through the sun gear 241 of the transmission mechanism 240, and then to the winch body 210 through the planetary gear 242, thereby driving the winch body 210 to rotate. When the transmission mechanism 240 is a planetary gear mechanism, both the motor 230 and the transmission mechanism 240 can be installed in the space of the inner ring of the winch body, thereby saving installation space. In addition, it can be easily understood by those skilled in the art that according to actual needs, deceleration can be achieved by setting a transmission ratio between the sun gear 241 and the planetary gear 242, as well as between the planetary gear 242 and the ring gear 211, so that the winch body 210 rotates at an appropriate speed.

Alternatively, the transmission mechanism 240 according to the principle of the present application can also be a bevel gear mechanism, as shown in FIG. 5. The bevel gear mechanism includes a first bevel gear 243, a second bevel gear 244, a third bevel gear 245, and a fourth bevel gear 246. The first bevel gear 243 is connected to the output end of the motor 230, the second bevel gear 244 is a flange surrounding the winch body 210 and installed on the winch body 210, and the third bevel gear 245 and the fourth bevel gear 246 are installed on the same shaft. The first bevel gear 243 meshes with the third bevel gear 245, and the fourth bevel gear 246 meshes with the second bevel gear 244. When the motor 230 is in operation, it can transmit power to the first bevel gear 243, and then to the second bevel gear 244 through the third bevel gear 245 and the fourth bevel gear 246, thereby driving the winch body 210 to rotate. It can be easily understood by those skilled in the art that when the transmission mechanism 240 is a bevel gear mechanism, it can be suitable for larger loads, such as loads above 20kg or 50kg. Advantageously, it is also possible to make the first bevel gear 243 directly mesh with the second bevel gear 244 based on the layout of the various mechanisms on the load-bearing device 100, thereby simplifying the structure of the transmission mechanism 240. It can be easily understood by those skilled in the art that according to actual needs, deceleration can be achieved by setting a transmission ratio between various bevel gears, so that the winch body 210 rotates at an appropriate speed.

Referring back to FIGS. 1 and 2, central axes of the winch bodies 210, i.e., axes around which the winch bodies 210 rotate, are perpendicular to the installation surface of the load-bearing device 100, which is therefore advantageous for the coordinated installation of the winch bodies 210 and the transmission mechanisms 240. At this time, the winch unit 200 can also include a rope guide mechanism 250, on which a pulley 251 is installed. In this way, the rope 220 that extends in a horizontal direction can be changed to extend in a perpendicular/vertical direction after passing through the pulley 251. The pulley 251 can also be provided with a V-shaped groove which surrounds the circumference of the pulley 251, so that the rope 220 can pass through the groove of the pulley 251 more stably without being prone to slipping. Alternatively, the central axes of the winch bodies 210 can also be parallel to the installation surface of the load-bearing device 100. At this time, a support seat can be provided on the installation surface to install two ends of the rotating shaft of the winch body 210 on the support seat, so that the central axes can be parallel to the installation surface of the load-bearing device 100. Therefore, the ropes 220 can extend in the vertical direction without the need to install rope guide mechanisms 250. It can be easily understood by those skilled in the art that the appropriate installation way for the winch body 210 can be selected based on the sizes and layout of various components on the installation surface.

Referring to FIG. 6, a fluid power device 300 can also be installed on the load-bearing device 100. When the load-bearing device 100 swings, for example, due to the influence of wind or other external forces, the fluid power device 300 can overall provide a force that is opposite to the direction of wind or the external force and of a sufficient magnitude to counteract the influence of wind or the external force, so that the load-bearing device 100 can maintain overall stability. It should be noted that although the number of the fluid power devices 300 schematically shown in FIG. 6 is four, the present application is not limited to this; rather, the number can be one, two, three, or more, which can be easily understood by those skilled in the art.

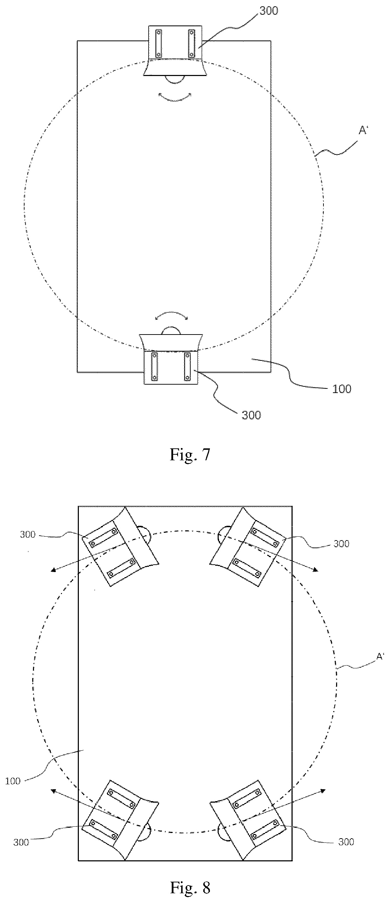

Referring to FIG. 7, the number of the fluid power devices 300 can be two, and the two fluid power devices 300 are evenly distributed along a circumference A' centered on the geometric center of the installation surface (evenly dividing the circumference A'). This ensures that the distance from each fluid power device to the geometric center of the installation surface is equal, which is advantageous for the stability and balance of the load-bearing device 100. The fluid power devices 300 and the winch bodies 210 can be located on the same circumference centered on the geometric center of the installation surface, or alternatively they may be not located on the same circumference. Preferably, the fluid power devices 300 are steerable for steering adjustment according to the direction of wind or the external force; moreover, by adjusting the flow rate and velocity of the fluid, the fluid power devices 300 can always provide a force that is opposite to the direction of wind or the external force and of a sufficient magnitude to counteract the influence of wind.

Referring to FIG. 8, the number of the fluid power devices 300 installed on the load-bearing device 100 is four, and the four fluid power devices 300 are distributed at intervals along a circumference centered on the geometric center of the installation surface. The fluid power devices 300 can provide forces in a tangential direction of the circumference, in other words, the fluid power devices 300 can provide forces in both clockwise and counterclockwise directions along the tangential direction of the circumference centered on the geometric center of the installation surface. Preferably, the number of the fluid power devices 300 that provide forces in the clockwise direction along the tangential direction and the number of the fluid power devices 300 that provide forces in the counterclockwise direction along the tangential direction are both two, and these fluid power devices 300 are alternately distributed. Therefore, a force in any direction can be provided by controlling the operation of any two adjacent fluid power devices 300 and controlling the flow rate and velocity of the fluid. Moreover, on one hand, when the fluid power device 300 provides the force along the tangent direction of the circumference A', it can avoid affecting other components arranged in the circumference A'; for example, if the fluid power device 300 is a duct or a propeller, when it provides a force toward the circumference A' through rotation, the generated airflow will affect other components arranged within the circumference A', such as causing disturbance to the rope; on the other hand, when the force of the fluid power device 300 is along the tangent direction, it is more advantageous for providing or composing the required force; for example, when the load-bearing device 100 is rectangular, the force bearing area on the long side is larger, and therefore a larger reaction force is required to counteract the influence of wind. Therefore, each fluid power device 300 can be set to provide a force along the tangent direction of the circumference A' and facing the long side, so that compared to providing forces in other directions, each fluid power device 300 only needs to provide a smaller force to provide or compose the required force to counteract the influence of wind. The fluid power devices 300 and the winch bodies 210 can be located on the same circumference centered on the geometric center of the installation surface, or alternatively they may be not located on the same circumference.

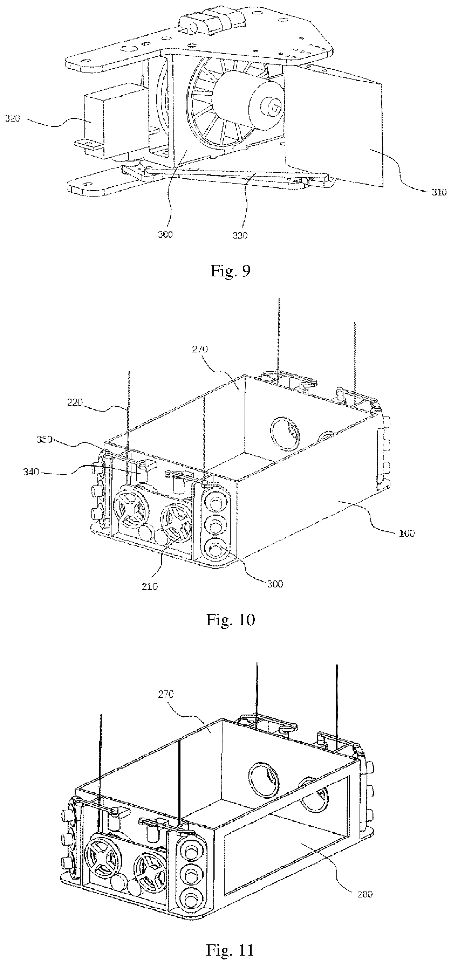

At least three fluid power devices 300 can be installed on the load-bearing device 100, and at this time, a steerable rudder 310 can be installed at a tail portion of each fluid power device 300, as shown in FIG. 9, so that the direction of the fluid emitted/sprayed from the fluid power device 300 can be changed by the rotation of the rudder 310, thereby providing forces in different directions. Alternatively, a steerable air guide pipe (not shown) can also be installed at the tail portion of each fluid power device 300. It can be easily understood by those skilled in the art that the load-bearing device 100 can also be provided with a motor 320 for driving the rudder 310 or the air guide pipe. The motor 320 can be connected to the rudder 310 through a connecting rod mechanism 330, thereby transmitting the power output by the motor 320 to the rudder 310. Alternatively, the motor 320 can also be connected to the rudder 310 through a gear mechanism.

Alternatively, at least three fluid power devices 300 can be installed on the load-bearing device 100, and each fluid power device 300 can be steerable to provide forces in different directions as needed. Alternatively, there can be at least three fluid power devices 300, and each fluid power device 300 can be fixed. At this time, each fluid power device 300 provides a force along a diameter direction of the circumference centered on the geometric center of the installation surface, so that different directions of force can be provided as needed by controlling the operation of each fluid power device 300 and the flow rate and velocity of the fluid.

The fluid power device 300 according to the principle of the present application can be a propeller, a duct, a gas injection device, or a liquid injection device, etc.

Still referring to FIGS. 1 and 6, the load-bearing device 100 can be provided with installation holes 260 for installing hooks or other components. The installation holes can be configured into different shapes according to the components required to be installed, such as a circular, elliptical, rectangular, triangular, or polygonal shape.

Referring to FIG. 10, another form, i.e., a rectangular box form, of the load-bearing device 100 according to the principle of the present application is shown. A top surface of the rectangular box is provided with an opening 270, so that objects that need to be lifted can be placed into the box through the opening 270 before lifting, thereby preventing the objects from falling off. When the load-bearing device 100 is a rectangular box, the number of the winch units 200 can be four, with two winch bodies 210 being be installed on each of two opposite side surfaces of the rectangular box respectively, thus ensuring that the ropes 220 are always in the vertical direction during lifting without the need to install rope guide mechanisms 250. Advantageously, the winch bodies 210 are arranged in such a way that their geometric centers can form vertices of a rectangle parallel to a bottom surface of the box, which is advantageous for the stability and balance of the load-bearing device 100.

Advantageously, at least one, such as one, two, three or more, fluid power device 300 can be installed on each edge in a height direction of the load-bearing device 100. The fluid power devices 300 can be fixed, providing different directions of force by controlling the operation of the fluid power device on each edge. Alternatively, the fluid power devices 300 can be steerable, providing different directions of force by controlling the steering of each fluid power device 300. Advantageously, a motor 340 and a connecting rod mechanism 350 can be installed on the load-bearing device 100; wherein the motor 340 provides steering power to the fluid power device 300, and the connecting rod mechanism 350 transmits the power output by the motor 340 to the fluid power device 300. Alternatively, the power output by the motor 340 can be transmitted to the fluid power device 300 through a gear mechanism.

Additionally or preferably, an opening 280 may be provided on the side surface of the rectangular box, as shown in FIG. 11, so as to facilitate taking or placing objects out of/into the opening 280. In this case, a door may be optionally provided at the opening 280. Compared to the top opening 270, objects with a certain/substantial weight can be placed into or taken out of the side opening 280 manually or by means of tools, thus avoiding inconvenience when taking or placing the objects out of/into the top opening 270.

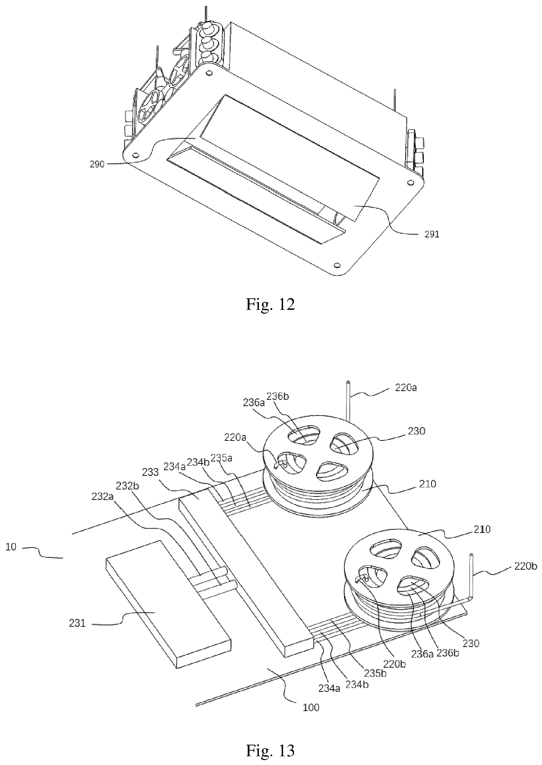

Additionally or alternatively, an opening 290 and a door 291 can be provided on the bottom surface of the rectangular box, as shown in FIG. 12. When placing the object, the door 291 is closed to provide a support force for the object. When it is necessary to take out the object, the door 291 can be opened to allow the object to fall or slide to a target position from a certain height.

Advantageously, a cut-off actuator (not shown) can also be provided on the load-bearing device 100. When the lifting tool 10 is in an abnormal state, the cut-off actuator can cut off the ropes 220 as needed, thereby avoiding damage to the lifting tool caused by the abnormal state. The abnormal states include but are not limited to the winch unit 200 not being able to operate, the rope 220 being entangled on foreign objects, and the load-bearing device 100 not being retracted after exceeding a preset time when lowered, etc.

The lifting tool 10 of the present application can be applied to lifting and loading devices such as but not limited to an unmanned or manned aircraft, a bridge crane, a gantry crane, a stacking crane, a boom crane, a floating crane, or a mast crane, as can be understood by those skilled in the art. When in use, the lifting tool 10 is wound around the winch body 210 through one end of the rope, and connected to the lifting and loading device through the other end of the rope, so that the lifting tool 10 can be suspended under the lifting and loading device.

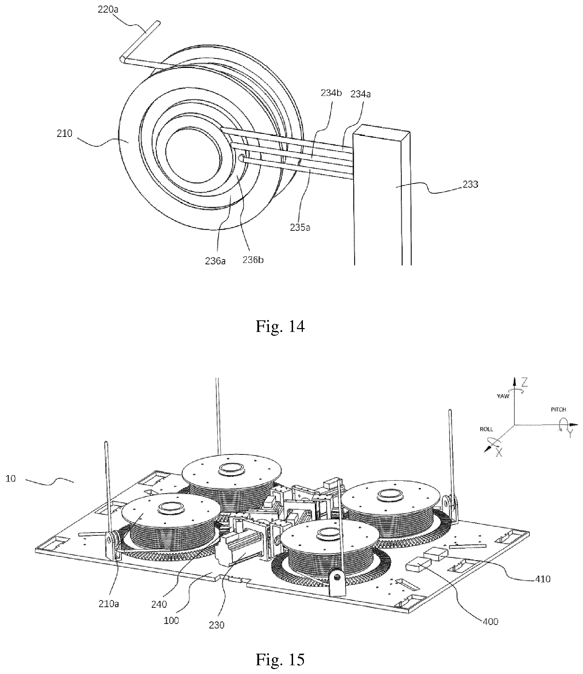

Referring to FIGS. 13 and 14, a power supply 231 can be installed on the load-bearing device 100 to provide power to the motor 230 or other devices in need. Advantageously, a charging and discharging control device 233 can also be installed on the load-bearing device 100. Positive and negative poles of the power supply 231 are electrically connected to the charging and discharging control device 233 through wires 232a and 232b respectively, so that the charging and discharging control device 233 can control the charging voltage and the current of the power supply 231, as well as the minimum discharging voltage and the maximum current of the power supply 231, thus stabilizing the output voltage and the current. The charging and discharging control device 233 is electrically connected to the motor 230 through two wires 234a and 234b respectively. The wires 234a and 234b are electrically connected to the wires 232a and 232b inside the charging and discharging control device 233 respectively, thus forming a circuit for supplying power to the motor 230, so that the power supply 231 can supply power to the motor 230.

Advantageously, the rope 220 of the present application can be conductive to provide a charging function for the power supply 231 when needed. For example, the rope 220 can be a steel wire rope, or a nylon rope with attached conductive wires, etc. When needed, the power supply 231 on the load-bearing device can be charged using the conductive rope through an external power supply, such as an external power supply of the lifting and loading device. In another embodiment, for example, referring to FIGS. 13 and 14, the end of the rope 220a that is not wound around the winch body 210 is electrically connected to a positive pole of an external power supply (not shown), and the end of the rope 220b that is not wound around the winch body 210 is electrically connected to a negative pole of the external power supply. It can be easily understood by those skilled in the art that the ropes 220a and 220b can be electrically connected to the positive and negative poles of the external power supply respectively through another charging and discharging control device (not shown). Moreover, the inner rings of the winch bodies 210 are each installed with a collector slip ring 236. A rotor 236a of the collector slip ring 236 is connected to the inner ring of the winch body 210 and can rotate together with the winch body 210. The respective ends of the rope 220a and the rope 220b that are wound around the winch body 210 can be electrically connected to the corresponding rotors 236a respectively, so that when the winch body 210 rotates, the current can be transmitted to a stator 236b through the rotor 236a. The charging and discharging control device 234 is electrically connected to the stators 236b of two collector slip rings 236 through wires 235a and 235b respectively, and the wires 235a and 235b are electrically connected to the wires 232a and 232b respectively inside the charging and discharging control device 234, thus forming a charging circuit that connects the power supply 231 with the external power supply. This achieves charging of the power supply 231 through the rope 220, improves the utilization rate of the rope 220, and simplifies the structure of the lifting tool 10.

It can be easily understood by those skilled in the art that in this embodiment, the motor 230 can be provided on the inner ring of the stator of the collector slip ring 236, thereby saving an installation space; moreover, charging can be carried out when the lifting tool 10 is in a non-working state to avoid affecting normal operation. Alternatively, inside the charging and discharging control device 233, two wires 234a and 234b can be electrically connected to the wires 235a and 235b respectively, allowing the motor 230 to be directly electrically connected to the external power supply so that the motor 230 can be powered directly by the external power supply. It can be easily understood by those skilled in the art that other electrical devices installed on the load-bearing device 100 can also be powered or charged through the above solution.

The present application also provides a system for adjusting the attitude of the lifting tool. The system includes an attitude sensor 400 and a control unit. Referring to FIG. 15, the attitude sensor 400 can be installed on the load-bearing device 100 to detect attitude information of the lifting tool 10 (such as angular velocity, acceleration, and magnetic field components). The control unit can receive the attitude information detected by the attitude sensor 400 and adjust the rotational speed and output torque of the motor 230 based on the attitude information. Then, the motor 230 transmits the rotational speed and the output torque to the winch body 210 through the transmission mechanism 240, so that the speed of retracting and deploying the rope by the winch body 210 and the torque applied to each winch body 210 are adjusted respectively, thus enabling the load-bearing device 100 to be always parallel to the ground.

The control unit according to the present application may include a controller 410 and a field-oriented control (FOC) electronic speed controller (not shown). The controller 410 can be a microcontroller unit (MCU), and the FOC electronic speed controller can be installed together with the motor 230, or they can be installed separately or independently. The controller 410 is capable of analyzing the received attitude information. If the attitude information shows that the attitude of the load-bearing device 100 is not in an expected state, the controller 410 will send an adjustment instruction to the FOC electronic speed controller to adjust the rotational speed and output torque of the motor 230. For example, when the part of the load-bearing device 100 on the side of the winch body 210a tilts downward due to torque imbalance and abnormal rotational speed of the winch body 210a caused by uneven loads on the load-bearing device 100, the attitude sensor 400 can detect the attitude abnormality information and transmit it to the controller 410. After analyzing the attitude information, the controller 410 will send an instruction to the FOC electronic speed controller to adjust the torque and rotational speed to expected values. The FOC electronic speed controller can then control the motor 230 to adjust the torque and rotational speed to the expected values, and transmit the adjusted torque and rotational speed to the winch body 210a through the transmission mechanism 240, so that the part of the load-bearing device 100 on the side of the winch body 210a no longer tilts downward or upward, thus maintaining in parallel with the ground.

Advantageously, the attitude sensor 400 may include a gyroscope and a magnetic compass. The gyroscope is capable of detecting the angular velocity and acceleration of the ROLL axis, PITCH axis and YAW axis of the load-bearing device 100, while the magnetic compass is capable of detecting components of the geomagnetic field on the ROLL axis, PITCH axis and YAW axis of the load-bearing device 100. The magnetic compass and gyroscope can transmit the components of the magnetic field and the angular velocity and acceleration of the ROLL axis and PITCH axis to the controller 410. The controller 410 can calculate expected values of the torque and rotational speed of the motor 230 through control algorithms such as PID (proportional-integral-differential), ADRC (self-disturbance rejection control), LQR (linear quadratic regulator), or MPC (model predictive control), and transmit an instruction to achieve the expected values to the FOC electronic speed controller, which controls the motor 230 to achieve the expected torque and rotational speed.

The present application also provides a method for adjusting the attitude of the lifting tool, which includes the following steps: first, detecting attitude information of the load-bearing device 100; preferably, the attitude information of the load-bearing device 100 can be detected by the attitude sensor 400 installed on the load-bearing device; then, analyzing the attitude information of the load-bearing device 100, and adjusting the rotational speed and output torque of the motor based on the analysis results of the attitude information of the load-bearing device; and finally, transmitting the adjusted rotational speed and output torque to the winch body. As can be easily understood by those skilled in the art, adjustments to the rotational speed and torque of the motor may not be performed if not necessary. According to the method of the present application, a controller can be used to adjust the rotational speed and output torque of the motor, and send a corresponding instruction. Preferably, a FOC electronic speed controller can receive the corresponding instruction sent by the controller, and the rotational speed and output torque of the motor 230 are adjusted according to this instruction. After the rotational speed and output torque of the motor 230 are adjusted, the adjusted rotational speed and output torque of the motor 230 are transmitted to the corresponding winch body 210, so as to adjust the speed of retracting and deploying the rope by the winch body 210 and the torque applied to the winch body 210, thus enabling the load-bearing device 100 to maintain in parallel to the ground.

It can be easily understood by those skilled in the art that by using the system and method for adjusting the attitude of the lifting tool of the present application, real-time automatic adjustment to the attitude of the lifting tool can be achieved, enabling the lifting tool to always maintain in parallel to the ground with high adjustment accuracy and simple operation.

Although at least one exemplary embodiment has been described in the foregoing detailed description, it should be understood that there are numerous variations. It should also be understood that one or more exemplary embodiments described herein are merely examples, and they are not intended to limit the scope, applicability, or construction of the present application in any way. On the contrary, the foregoing detailed description will provide convenient guidance for those skilled in the art to carry out one or more exemplary embodiments. It should be understood that various changes, variations, or alterations may be made to the functions and arrangement of the elements without departing from the scope of the present application as explained by the attached claims and equivalent solutions thereof.

## Claims

1. A lifting tool (10), including a load-bearing device (100) and a plurality of winch units (200) installed on the load-bearing device; wherein the winch unit (200) includes a winch body (210), a rope (220), a motor (230), and a transmission mechanism (240); the motor (230) transmits power to the winch body (210) through the transmission mechanism (240) to drive the winch body (210) to rotate; one end of the rope (220) is wound around the winch body (210), and the other end of the rope (220) is connected to a lifting and loading device.

2. The lifting tool (10) of claim 1, wherein the transmission mechanism (240) is a planetary gear mechanism, in which a sun gear (241) of the planetary gear mechanism is installed on an output end of the motor(230), a gear ring (211) of the planetary gear mechanism is integrated with an inner side of the winch body (210), and a planetary gear (242) of the planetary gear mechanism meshes with the gear ring (211).

3. The lifting tool (10) of claim 1, wherein the transmission mechanism (240) is a bevel gear mechanism, which includes a first bevel gear (243) installed on an output end of the motor (230); the winch body (210) is installed with a flange surrounding the winch body (240), and the flange is a second bevel gear (244) provided with teeth; wherein the motor (230) can drive the winch body (210) to rotate through the first bevel gear (243) and the second bevel gear (244).

4. The lifting tool (10) of claim 3, wherein the bevel gear mechanism further includes a third bevel gear (245) and a fourth bevel gear (246); wherein the third bevel gear (245) and the fourth bevel gear (246) are installed on the same shaft; the first bevel gear (243) meshes with the third bevel gear (245), and the second bevel gear (244) meshes with the fourth bevel gear (246).

5. The lifting tool (10) of any one of claims 1-4, wherein the load-bearing device (100) has at least one installation surface, and the winch bodies (210) are distributed on the at least one installation surface of the load-bearing device (100) at intervals along a circumference (A) centered on a geometric center of the installation surface.

6. The lifting tool (10) of claim 5, wherein the load-bearing device (100) has two installation surfaces, and the winch bodies (210) are installed to the two installation surfaces in a space between the two installation surfaces.

7. The lifting tool (10) of claim 5, wherein the number of the winch units (200) is four, and the winch bodies (210) are arranged in such a way that geometric centers thereof can form vertices of a rectangle (B).

8. The lifting tool (10) of claim 5, wherein central axes of the winch units (200) are perpendicular to the installation surface of the load-bearing device (100).

9. The lifting tool (10) of claim 8, wherein the winch unit (200) further includes a rope guide mechanism (250), on which a pulley (251) is installed for changing the direction of the rope (220).

10. The lifting tool (10) of claim 5, wherein at least four fluid power devices (300) are further installed on the installation surface, and the fluid power devices (300) are distributed at intervals along the circumference (A) and can provide forces along a tangential direction of the circumference (A); and wherein the number of the fluid power devices (300) that provide forces in a clockwise direction along the tangential direction and the number of the fluid power devices (300) that provide forces in a counterclockwise direction along the tangential direction are both two, and these fluid power devices (300) are alternately distributed.

11. The lifting tool (10) of any of claims 1-4, wherein the load-bearing device (100) is a rectangular box.

12. The lifting tool (10) of claim 11, wherein the number of the winch units (200) is four, with two winch bodies being installed on each of two opposite side surfaces of the rectangular box respectively; the winch bodies (210) are arranged in such a way that geometric centers thereof can form vertices of a rectangle parallel to a bottom surface of the rectangular box.

13. The lifting tool (10) of claim 12, wherein the rectangular box is provided with an opening (270; 280) on a top surface or side surface, or with a door (291) that can be opened and closed on a bottom surface.

14. A system for adjusting the attitude of the lifting tool (10) of any one of claims 1-13, wherein the system includes an attitude sensor (400) and a control unit; the attitude sensor (400) is installed on the load-bearing device (100) to detect attitude information of the lifting tool (10), and the control unit is capable of receiving the attitude information detected by the attitude sensor (400) and adjusting a rotational speed and output torque of the motor based on the attitude information.

15. The system of claim 14, wherein the control unit includes a controller (410) and a FOC electronic speed controller; wherein the controller (410) is capable of receiving the attitude information detected by the attitude sensor (400) and sending or not sending an instruction to adjust the rotational speed and output torque of the motor (230) to the FOC electronic speed controller based on the attitude information.
